Europäisches Patentamt

(19) European Patent Office

Office européen des brevets

(11) Veröffentlichungsnummer: **0 219 765 B1**

(12) # EUROPÄISCHE PATENTSCHRIFT

(45) Veröffentlichungstag der Patentschrift:
28.06.89

(51) Int. Cl.⁴: **G11B 5/70**, G11B 5/702

(21) Anmeldenummer: 86113937.6

(22) Anmeldetag: 08.10.86

(54) **Magnetischer Aufzeichnungsträger mit strahlenhärtbaren Dispergatoren.**

(30) Priorität: 19.10.85 DE 3537258

(43) Veröffentlichungstag der Anmeldung:
29.04.87 Patentblatt 87/18

(45) Bekanntmachung des Hinweises auf die Patenterteilung:
28.06.89 Patentblatt 89/26

(84) Benannte Vertragsstaaten:
DE FR GB

(56) Entgegenhaltungen:
US-A- 4 526 837

PATENT ABSTRACTS OF JAPAN, Band 8,
Nr. 265 (P-318)[1702], 5. Dezember 1984; & JP - A
- 59 132 417
PATENT ABSTRACTS OF JAPAN, Band 8,
Nr. 233 (P-309)[1670], 26. Oktober 1984; & JP - A
- 59 110 031

(73) Patentinhaber: Agfa-Gevaert AG,
D-5090 Leverkusen 1(DE)

(72) Erfinder: Brinkmeyer, Hermann, Dr.,
Bodelschwinghstrasse 12, D-4150 Krefeld(DE)
Erfinder: Hübler, Gerhard, Dr.,
Hammersbacherstrasse 12, D-8000 München 70(DE)
Erfinder: Perrey, Hermann, Dr., Auf der Rheinaue 8,
D-4150 Krefeld(DE)
Erfinder: Nippe, Burkhard, Dr., Krennerweg 20,
D-8000 München 71(DE)
Erfinder: Kober, Heinrich, Dr., Georgstrasse 12,
D-8021 Hohenschäftlarn(DE)

## Beschreibung

Die Erfindung betrifft magnetische Aufzeichnungsträger mit strahlenhärtbaren Dispergatoren auf Basis von ethylenisch ungesättigten Phosphorsäureestergemischen.

Magnetische Aufzeichnungsträger bestehen im wesentlichen aus einem Schichtträger und einer feinteilige magnetische Pigmente sowie polymere Bindemittel enthaltenden Schicht.

Neben diesen Hauptbestandteilen können die Magnetschichten unter anderem auch Gleitmittel, Schleifmittel, Füllstoffe, Weichmacher, antistatische Mittel sowie durch die Herstellung bedingt viskositätsregulierende Stoffe und auch Dispergierhilfsmittel, sogenannte Dispergatoren, enthalten.

Die Dispergatoren sind grenzflächenaktive Stoffe, die die Aufgabe haben, eine gleichmäßig feine, agglomeratfreie Verteilung der Pigmente, insbesondere Magnetpigmente im Bindemittel zu gewährleisten und eine weitestgehende Ausrichtung der Magnetpigmente zu ermöglichen, so daß hervorragende elektroakustische Werte erzielt werden.

Mit einem hohen Dispergierungsgrad wird gleichzeitig auch eine bessere Oberflächenglätte erreicht, die eine wesentliche Voraussetzung für einen engen Kontakt zwischen Magnetkopf und Magnetaufzeichnungsträger ist, die bei Magnet bändern gleichmäßige Laufeigenschaften ermöglicht und den Reibungsverlust und den Abrieb am Magnetaufzeichnungsträger und Magnetkopf vermindert. Ferner sollen die Dispergatoren die Anbindung des Bindemittels am Pigment verbessern.

Verschiedene Dispergatoren für Magnetpigmente sind bekannt und im Gebrauch, wie zum Beispiel Fettsäuren, deren Ammoniumsalze, Fettsäureamide, aliphatische Amine, aliphatische, aromatische araliphatische Sulfonsäure, Sulfonsäureester, Fettalkoholsulfonate, Phosphorsäureester von Polyoxalkylen, Sorbitanester und Phosphatide wie Lecithine und Kephaline.

Mit solchen Dispergatoren ist es zwar möglich, eine ausreichende Verteilung der Magnetpigmente im Bindemittel zu erzielen, jedoch verringern diese niedrigmolekularen Verbindungen die Festigkeit der Magnetschicht und durch Migration dieser Dispergatoren können auf Dauer Eigenschaftseinbußen, zum Beispiel in den Laufeigenschaften eines Magnetbandes, eintreten.

In der GB 2 097 415 werden Phosphorsäureester als Dispergatoren beschrieben, insbesondere Umsetzungsprodukte aus einem Di-(hydroxypolyoxalkylen)-phosphorsäureester mit einem Addukt aus einem Hydroxyalkyl(meth)acrylat und einem Polyisocyanat, die damit über ethylenisch ungesättigte Doppelbindungen verfügen und zusammen mit einem polymerisierbaren Bindemittel zur Herstellung von strahlenvernetzten Magnetbeschichtungen verwendet werden und so die zuvor geschilderten Nachteile beseitigen.

Bedingt durch die Herstellung mit Phosphoroxychlorid wird bei der Synthese dieser Dispergatoren Chlorwasserstoff frei. Selbst durch mehrere, stark ausbeutemindernde Wasch prozesse mit Wasser können die Phosphorsäureester aus Phosphoroxychlorid und einem mehrfunktionellen Alkohol nicht vollständig von Chlorwasserstoff befreit werden. Eine effektivere, alkalische Wäsche ist aufgrund der Wasserlöslichkeit der gebildeten Salze oder der Ausbildung von Emulsionen bei diesen Umsetzungsprodukte nur in Ausnahmefällen möglich. Spuren von Chloridionen gelangen somit in die Magnetdispersionen und können eine Korrosion am Magnetkopf fördern.

Erfindungsgemäß werden die zuvor geschilderten Nachteile überwunden mit einem magnetischen Aufzeichnungsträger mit strahlenhärtbaren Dispergatoren auf der Basis ethylenisch ungesättigter Phosphorsäureestergemische, die zur Ausbildung betain-artiger Strukturen befähigt sind, bestehend aus einem Umsetzungsprodukt von

A 1-2,5 Äquivalenten OH eines eine Hydroxylgruppe pro Molekül enthaltenden (Meth)Acrylsäureesters und/oder Oligo(meth)acrylates

B 1-2,5 Äquivalenten OH eines eine Hydroxylgruppe pro Molekül enthaltenen gesättigten und/oder ethylenisch ungesättigten tertiären Alkylamins und

C 1 Mol Phosphorpentoxid oder 1 Mol Phosphorpentoxidäquivalent,

wobei die Summe der Äquivalente OH aus A und B wenigstens 3-4 beträgt und die Umsetzungsprodukte eine Säurezahl (mg KOH/g Substanz) von weniger als 200, vorzugsweise von weniger als 150, insbesondere von weniger als 100 aufweisen und gegebenenfalls mit einer Base neutralisiert sind. Die Herstellung der erfindungsgemäßen Dispergatoren wird

Eine Hydroxylgruppe pro Molekül enthaltende (Meth)Acrylsäureester (A) sind Hydroxylalkyl(meth)acrylate oder eine Hydroxylgruppe pro Molekül enthaltende Oligo(meth)acrylate wie zum Beispiel 2-Hydroxyethyl(meth) acrylat, 2-Hydroxypropyl (meth)-acrylat, 3-Hydroxypropyl(meth)acrylat, 4-Hydroxybutyl(meth)acrylat, 3-Chlor-2-hydroxypropyl(meth)acrylat, 6-Hydroxyhexyl(meth)acrylat, Glycerindi(meth)acrylat, Trimethylolpropandi(meth)acrylat, Pentaerythrittri(meth)acrylat, (Meth)Acrylsäureester der entsprechenden oxethylierten und/oder oxpropylierten Alkohole sowie Ester aus mindestens einem der zuvor beispielhaft beschriebenen, eine Hydroxylgruppe pro Molekül enthaltenden Hydroxyalkyl(meth)acrylate oder Oligo(meth)acrylat und eine aliphatischen $C_3$-$C_{18}$-Monohydroxymonocarbonsäure, wie zum Beispiel 2-Hydroxypropansäure, 3-Hydroxypropansäure, 2-Hydroxybutansäure, 3-Hydroxybutansäure, 2-Hydroxy-3-methylpropansäure, 2-Hydroxypentansäure, 3-Hydroxypentansäure, 2,2-Dimethyl-3-hydroxypropansäure, 2-Hydroxyhexansäure, 3-Hydroxyhexansäure, 10-Hydroxydecansäure, 12-Hydroxydodecansäure, 10-Hydroxyhexadecansäure, 10-Hydroxystearinsäure oder Ricinolsäure.

Die Methoden zur Herstellung von Estern aus einer Hydroxycarbonsäure und einem eine Hydroxylgruppe pro Molekül enthaltenden Hydroxyalkyl(meth)acrylat oder Oligo(meth)acrylat sind den Eigenschaften der Hydroxycarbonsäuren anzupassen.

Hydroxycarbonsäuren, die nicht zur Bildung intramolekularer Ester neigen, können zum Beispiel unter den Bedingungen einer azeotropen Veresterung mit einem eine Hydroxylgruppe pro Molekül enthaltenden Hydroxyalkyl(meth)acrylat oder Oligo(meth)acrylat umgesetzt werden. Als Schleppmittel sind aliphatische, aromatische oder halogenhaltige aliphatische Kohlenwasserstoffe geeignet, wie zum Beispiel Petrolether, Cyclohexan, Benzol, Toluol, Tetrachlorkohlenstoff. Die Veresterung kann durch saure Katalysatoren wie Schwefelsäure oder p-Toluolsulfonsäure beschleunigt werden.

Eine weitere Methode ist die Umesterung von geeigneten Hydroxycarbonsäureestern mit einem eine Hydroxylgruppe pro Molekül enthaltenden Hydroxyalkyl(meth)acrylat oder Oligo(meth)acrylat in Gegenwart eines Umesterungskatalysators. Hydroxycarbonsäuren, die vorzugsweise als β-Lacton vorliegen, können als solche mit einem dieser eine Hydroxylgruppe pro Molekül enthaltenden (Meth)Acrylsäureester unter Zuhilfenahme eines geeigneten Katalysators umgesetzt werden (vergleiche Methoden der Organischen Chemie, Houben-Weyl, Band 6/2, Seite 530, 6. Thieme Verlag, Stuttgart 1963).

Geeignet als Reaktionskomponente A sind auch eine Hydroxylgruppe pro Molekül enthaltende Polyester(meth)acrylate, die aus einem bezüglich der Hydroxylgruppen di- oder trifunktionellen Alkohol, gesättigten oder ungesättigten Polyester oder Polyether als Komponente I, einer aliphatischen, cycloaliphatischen oder aromatischen Dicarbonsäure als Komponente II, wobei cyclische Dicarbonsäureanhydride wie zum Beispiel Bernsteinsäureanhydrid, Maleinsäureanhydrid, Phthalsäureanhydrid, Tetrahydrophthalsäureanhydrid, Hexanhydrophthalsäureanhydrid bevorzugt werden, und einem eine Hydroxylgruppe pro Molekül enthaltenden Hydroxyalkyl(meth)acrylat oder Oligo(meth)acrylat als Komponente III erhalten werden, wobei die Stöchiometrie der Komponenten I - III so gewählt wird, daß Polyester(meth)acrylate entstehen, die nur eine Hydroxylgruppe pro Molekül enthalten. Zweckmäßigerweise erfolgt die Umsetzung der Komponenten in der Reihenfolge, daß in einer Vorstufe die Dicarbonsäure (Komponente II), vorzugsweise als Anhydrid, mit einem eine Hydroxylgruppe pro Molekül enthaltenden Hydroxyalkal(meth)acrylat oder Oligo(meth)acrylat (Komponente III) und anschließend die Vorstufe mit dem di- oder trifunktionellen Polyol (Komponente I) umgesetzt wird.

Ebenso können als Reaktionskomponente A eine Hydroxylgruppe pro Molekül enthaltende Polyester- oder Polyether(meth)acrylate verwendet werden, die durch direkte Veresterung von 1 Mol der di- oder trifunktionellen Komponente I mit 1 beziehungsweise 2 Mol (Meth)Acrylsäure erhalten werden. Bevorzugt werden in beiden Fällen difunktionelle Komponenten I.

Die Veresterungsreaktionen sowie die Alkoholyse der cyclischen Dicarbonsäureanhydride können durch die bekannten sauren Katalysatoren beschleunigt werden. Die Veresterungsreaktionen erfolgen vorzugsweise unter den Bedingungen einer azeotropen Veresterung.

Ferner sind als Komponente A zur Herstellung der erfindungsgemäßen Dispergatoren eine Hydroxylgruppe pro Molekül enthaltende Urethan(meth)acrylate geeignet, die aus einem der bereits beispielhaft erwähnten, eine Hydroxylgruppe pro Molekül enthaltenden Hydroxyalkyl(meth)acrylate oder Oligo(meth)acrylate, einem Polyisocyanat und einem difunktionellen Polyol erhalten werden. Als Polyisocyanate sind beispielsweise 2,4-Toluylendiisocyanat, 2,6-Toluylendiisocyanat, Diphenylmethan-4,4'-diisocyanat, Hexamethylendiisocyanat, Isophorondiisocyanat, Triisocyanat, die durch Reaktion von Trimethylolpropan und Diisocyanaten im Verhältnis 1 : 3 oder die durch Reaktion von Diisocyanaten mit Wasser erhalten werden, geeignet. Als difunktionelle Polyole seien hier beispielhaft aufgeführt: Ethylenglykol, Propandiol-1,2, Propandiol-1,3, Butandiol-1,4, Neopentylglykol, Hexandiol-1,4, Hexandiol-1-,6, 1,4-Dihydroxycyclohexan, 1,4-Bis-hydroxymethyl-cyclohexan, Diethylenglykol, Triethylenglykol, Tetraethylenglykol, Octaethylenglykol, Polyether mit zwei Hydroxylgruppen pro Molekül aus Ethylenoxid oder Propylenoxid, Polyester mit zwei Hydroxylgruppen pro Molekül aus mindestens einem difunktionellen Alkohol und mindestens einer Dicarbonsäure wie Bernsteinsäure, Glutarsäure, Adipinsäure, Fumarsäure, Maleinsäure, Phthalsäure, Isophthalsäure, Tetrahydrophthalsäure und Hexahydrophthalsäure.

Die eine Hydroxylgruppe pro Molekül enthaltenden Urethan(meth)acrylate können vorzugsweise so hergestellt werden, daß in einer Vorreaktion ein Addukt aus einem eine Hydroxylgruppe pro Molekül enthaltenden Hydroxyalkyl(meth)acrylat oder Oligo(meth)acrylat und einem polyfunktionellen Isocyanat synthetisiert wird, wobei die Molverhältnisse so gewählt werden, daß ein freies NCO pro Molekül Addukt verbleibt. Anschließend kann das Addukt mit einem der beispielhaft aufgeführten Polyole umgesetzt werden. Die Umsetzungen können gegebenenfalls in gegenüber den Polyisocyanaten inerten Lösungsmitteln wie zum Beispiel Aceton, Butanon, Cyclohexanon, Benzol, Toluol, Cyclohexan, Methylenchlorid, Ethylenglykoldimethylether, Tetrahydrofuran, Dioxan, Ethylacetat, Butylacetat, Dimethylformamid oder Gemische dieser Lösungsmittel durchgeführt werden.

Die Reaktionstemperaturen betragen bei diesen Umsetzungen im allgemeinen 20 - 90 °C, jedoch lassen sich unter Umstän den auch höhere Temperaturen anwenden.

Die Isocyanatreaktionen können in an sich bekannter Weise zum Beispiel mit Zinnoctoat, Dibutylzinndilaurat oder tertiären Aminen katalysiert werden.

Als Reaktionskomponente B zur Herstellung der erfindungsgemäßen Dispergatoren werden eine Hydroxylgruppe pro Molekül enthaltende gesättigte oder ethylenisch ungesättigte, tertiäre Alkylamine verwendet, wie zum Beispiel Dimethylaminoethanol, 2-(2-Dimethylamino-ethoxy)-ethanol, 2-Diethylaminoethanol, 2-(2-Diethylamino-ethoxy)ethanol, 2-Dipropylaminoethanol, 2-Dibutylaminoethanol, 3-Dimethylamino-2-propanol, 2-(Cyclohexylmethylamino)ethanol, 2-(Cyclohexylethylamino)ethanol, 2-(Methylphenylamino)ethanol, 2-(Ethylphenylamino)ethanol, 1-(Ethylphenylamino)-2-propanol sowie Michael-Additionsprodukte aus einem (Meth)Acrylsäureester mit 1-3 (Meth)Acryloylgruppen pro Molekül, vorzugsweise Acryloylgruppen, und einem eine Hydroxylgruppe pro Molekül enthaltenden sekundären Alkylamin.

Geeignete (Meth)Acrylsäureester sind beispielsweise Methyl(meth)acrylat, Ethyl(meth)acrylat, Propyl(meth)acrylat, Butyl(meth)acrylat, iso-Butyl(meth)acrylat, Hexyl(meth)acrylat, 2-Ethylhexyl(meth)acrylat, 1,4-Butandioldi(meth)acrylat, Neopentylglykoldi(meth)acrylat, 1,6-Hexandioldi(meth)acrylat, Trimethylolpropan-tri(methyl)acrylat oder ein oxethyliertes oder oxpropyliertes Trimethylolpropantri(meth)acrylat.

Als sekundäre Alkylamine seien beispielhaft 2-Methylaminoethanol, 2-Ethylaminoethanol, 2-Methylaminopropanol, 2-Ethylaminopropanol, 2-Cyclohexylaminoethanol, 1-Cyclohexylamino-2-propanol, 2-Phenylaminoethanol genannt.

Eine Hydroxylgruppe pro Molekül enthaltende gesättigte oder ethylenisch ungesättigte tertiäre Alkylamine (Komponente B) werden ferner auch durch eine Michael-Additionsreaktion einer der bereits zuvor beschriebenen, eine Hydroxylgruppe pro Molekül enthaltenden Hydroxyalkyl(meth)acrylate oder Oligo(meth)acrylate, vorzugsweise Acrylate, mit einem sekundären Alkylamin erhalten wie zum Beispiel Dimethylamin, Diisobutylamin, Bis-(2-ethylhexyl)amin, Dodecylmethylamin, Methyltetrahexylamin, Hexadecylmethylamin, Methyloctadecyclamin, Diallylamin und andere.

Die Umsetzung der Komponenten A, B und C zu den erfindungsgemäßen Dispergatoren erfolgt derart, daß die Komponenten A und B vorgelegt werden und $P_2O_5$ (Komponente C) portionsweise unter Kühlung zugesetzt wird. Gegebenenfalls kann zur leichteren Dosierung $P_2O_5$ (Komponente C) auch als Polyphosphorsäure zugetropft werden. Zur Erzielung eines ausreichenden Umsatzes wird in Summe der Komponenten A und B ein Überschuß, bezogen auf Komponente C, verwendet. Die Umsetzung erfolgt bei erhöhter Temperatur, vorzugsweise 40 - 100 °C. Die Reaktion kann gegebenenfalls auch in Gegenwart eines inerten Lösungsmittels wie zum Beispiel Benzol, Toluol, Cyclohexan, Ethylacetat, Butylacetat, Methylenchlorid, Dioxan, Tetrahydrofuran, Aceton, Butanon, Diethylketon, Cyclohexanon durchgeführt werden.

Für einige Anwendungen sind Neutral-Dispergatoren erwünscht. Die Dispergatoren, die durch Umsetzung der Komponenten A, B und C erhalten werden und noch eine Restsäurezahl aufweisen, können entsprechend dieser Säurezahl mit einer Base wie Alkalihydroxide, Alkalicarbonate, Alkalihydrogencarbonate, Ammoniak, den bekannten primären und sekundären Aminen, insbesondere tertiären Aminen, neutralisiert werden. Aliphatische oder cycloaliphatische Amine sind bevorzugt, die gegebenenfalls auch über Hydroxylsubstituenten oder auch Halogensubstituenten verfügen können. Auch können zur Neutralisation ungesättigte Amine verwendet werden, wie zum Beispiel N,N-Dimethylaminoethylmethacrylat, Aminopropylmethacrylamid, Michael-Addukte von sekundären Aminen an Di- oder Tri(meth)acrylaten oder Verbindungen, wie sie unter Komponente B aufgeführt werden.

Sofern die bei der Herstellung der Komponente A und gegebenenfalls der Komponenten C oder der Umsetzung der Komponenten A, B und C zugegebenen Inhibitoren und Antioxidantien, die in Mengen von je 0,001 - 0,1 Gew.%, bezogen auf die Gesamtmischung, zugesetzt werden, noch keine ausreichende Dunkellagerstabilität gewährleisten, kann mit diesen Inhibitoren und Antioxidantien eine Nachstabilisierung durchgeführt werden.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1 - 6 C-Atomen enthalten, Amine, vorzugsweise sekundäre Acrylamine und ihre Derivate, Chinone, Kupfer-I-Salze organischer Säuren oder Anlagerungsverbindungen von Kupfer(I) halogeniden an Phosphite.

Namentlich seien genannt: 4,4'-Bis-(2,6-di-tert.-butyl)-phenol; 1,3,5-Trimethyl-2,4,6-tris-(3,5-di-tert.-butyl-4-hydroxy-benzyl)-benzol, 4,4'-Butyliden-bis-(6-tert.-butyl-m)-kresol, 3,5-Di-tert.-butyl-4-hydroxybenzylphosphonsäurediethylester, N,N'-Bis-(β-naphtyl)-p-phenylendiamin, N,N'-Bis-(1-methylheptyl)-p-phenylendiamin, Phenyl-β-naphtylamin, 4,4'-Bis-(α,α-dimethylbenzyl)-diphenylamin, 1,3,5-Tris-(3,5-di-tert.-butyl-4-hydroxyhydrocinnamoyl)-hexa hydro-s-triazin, Hydrochinon, p-Benzochinon, 2,5-Di-tert.-butylchinon, Toluhydrochinon, p-tert.-Butyl-brenzcatechin, 3-Methylbrenzcatechin, 4-Ethylbrenzcatechin, Chloranil, Naphthochinon, Kupfernaphthenat, Kupferoctoat, Cu(I)Cl/Triphenylphosphit, Cu(I)Cl/Trimethylphosphit, Cu(I)Cl/Trichlorethyl-phosphit, Cu(I)Cl/Tripropylphosphit, p-Nitrosodimethylanilin.

Weitere geeignete Stabilisatoren sind in "Methoden der organischen Chemie" (Houben-Weyl), 4. Auflage, Band XIV/1, Seite 433 - 452, 756, Georg Thieme Verlag, Stuttgart 1961, beschrieben.

Die erfindungsgemäßen Dispergatoren sind vorzüglich zur Dispergierung von Magnetpigmenten geeignet, wie zum Beispiel $\gamma\text{-Fe}_2O_3$, Mischkristalle aus $\gamma\text{-Fe}_2O_3$, Cobalt-dotiertes $\gamma\text{-Fe}_2O_3$ oder $Fe_3O_4$, $CrO_2$, Bariumferrit, ferromagnetische Legierungen wie Fe-Co, Co-Ni, Fe-Co-Ni, Fe-Co-B, Fe-Co-Cr-B, Mn-B, Mn-Al, Fe-Co-V, Eisennitrid oder Gemische dieser Stoffe.

Die erfindungsgemäßen Dispergatoren sind auch anwendbar auf andere Pigmente und Pulver, wie zum Beispiel zur Dispergierung von antistatischen Mitteln, zum Beispiel Ruß, Graphit, Rußpfropfpolymere, von pulvrigen Gleitmitteln, zum Beispiel Molybdänoxid, Wolframdisulfid, Glimmer oder gegebenenfalls organische Pulver wie Polyethylen, Polypropylen, Ethylen-Vinylchlorid-Copolymere, Teflon und von pulvrigen Schleif- und Füllmitteln wie zum Beispiel Aluminiumoxid, Chromoxid, natürlichem und künstlichem Korund, natürlichem und künstlichem Diamant, Granat, Siliciumcarbid, Siliciumoxid, Titandioxid, α-Fe$_2$O$_3$, Bornitrid, Calciumcarbonat, Calciumsulfat, Kaolin, Talkum, Molybdändisulfid, Zirkonoxid und andere, die beispielsweise zur Her stellung von Rückschichten, insbesondere bei Videobändern, eingesetzt werden.

Die Dispergierung solcher Pigmente und Pulver kann unter Zuhilfenahme der erfindungsgemäßen Dispergatoren in einem Lösungsmittel, Lösungsmittelgemisch oder einem gelösten Bindemittel erfolgen. Als Bindemittel eignen sich die bekannten Mischpolymerisate, wie zum Beispiel Vinylchlorid/ Vinylester-Copolymere, Methacrylsäureester/Vinylchlorid-Copolymere, Acrylnitril/Butadien-Copolymere oder Polyurethane, Polyester, Polyamide, Polyepoxide, Celluloseester und andere.

Im besonderen Maße eignen sich die erfindungsgemäßen Dispergatoren in Kombination mit strahlenhärtbaren Bindemitteln, wie sie für Magnetbeschichtungen beispielsweise in den Deutschen Offenlegungsschriften 30 29 818, 30 29 819, 31 09 765, 31 33 439, 31 33 440, 31 37 691, 32 00 970, 32 07 293, den Europäischen Patentanmeldungen 0 047 321, 0 083 666 und auch für strahlenhärtbare Rückseitenbeschichtungen von Magnetbändern in den Deutschen Offenlegungsschriften 32 13 055 und 32 21 198 beschrieben werden.

Die Herstellung der Beschichtungsdispersionen erfolgt in bekannter Weise durch Vermischen des magnetischen Materials mit einem geeigneten Lösungsmittel durch Kneter, Rührer, Dissolver oder mittels anderer Mischaggregate. Üblicherweise wird eine vorgemischte Dispersion hergestellt, die vorwiegend aus magnetischem Pigment, pulvrigem, antistatischem Mittel, pulvrigem Gleit- und Schleifmittel, Lösungsmittel und den erfindungsgemäßen Dispergatoren und gegebenenfalls auch Bindemittel besteht, und die bis zur ausreichenden Verteilung der Pigmente und Pulver einem Mahlprozeß unterworfen wird. Die Mahlung erfolgt zum Beispiel in Kugelmühlen, Perlmühlen, Sandmühlen oder ähnlichem. Anschließend wird die Vordispersion mit Lösungsmittel, gelöstem Bindemittel sowie flüssigen oder in den verwendeten Lösungsmitteln löslichen Additiven, wie zum Beispiel Gleitmittel, Weichmacher und viskositätsregulierende Stoffe, zu einer Beschichtungsdispersion geeigneter Viskosität vermischt beziehungsweise vermahlt.

Die Auftragung der Magnetdispersion erfolgt unter Beaufschlagung mit einem Magnetfeld mittels eines geeigneten Aggregats (Reverse-Roll-Coater, Rasterdrucker, Extrudergießer) auf einen nichtmagnetisierbaren Träger, der beispielsweise aus einem Polyester wie Polyethylenterephthalat, einem Polyolefin wie Polypropylen, einem Celluloseester wie Cellulosediacetat oder Cellulosetriacetat, einem Polycarbonat, Polyamid, Polyimid, aus Papier, einer Metallfolie oder einem starren Träger, der aus Aluminium oder Kupfer oder ähnlichem Material bestehen kann.

Nach Abdampfen der Lösungsmittel kann der ungehärtete magnetische Aufzeichnungsträger einer Kalanderung zwischen auf 60 °C beheizten Walzen bei 80° kp/cm Liniendruck unterzogen werden. Anschließend wird er mit ionisierenden Strahlen (Elektronen-, Neutronen-, Gamma-, Röntgenstrahlen) gehärtet. Vorzugsweise erfolgt die Aushärtung durch Elektronenstrahlen mit einer Strahlungsdosis von 0,5 - 25 Mrad, insbesondere von 0,5 - 10 Mrad. Um eine ausreichende Tiefenhärtung zu erzielen, sollte die Beschleunigerspannung nicht unter 100 kV liegen.

Eine höhere Beschleunigerspannung ermöglicht, insbesondere bei bandförmigen magnetischen Aufzeichnungsträgern, das gleichzeitige und sehr wirtschaftliche Aushärten mehrerer Bandlagen unter einer Strahlungsquelle, so daß hohe Produk tionsgeschwindigkeiten erzielt werden können.

Die Herstellung der erfindungsgemäße Dispergatoren wird durch die nachfolgenden Beispiele verdeutlicht.

## Hydroxylgruppenhaltiger, ungesättigter Partialester A

Es wird ein OH-gruppenhaltiger, ethylenisch ungesättigter Partialester hergestellt, in dem 1 Mol eines oxethylierten Trimethylolpropans (OH-Zahl 550 (mg KOH/g Substanz), Oxethylierungsgrad ca. 4) mit 2 Mol Acrylsäure azeotrop verestert werden.

925 g oxethyliertes Trimethylolpropan werden mit 430 g Acrylsäure, 12 g p-Toluolsulfonsäure, 1 g p-Methoxyphenol, 1,2 g Di-tert.-butylhydrochinon und 280 g Toluol unter Durchleiten von Luft zum Rückfluß erhitzt und das entstehende Reaktionswasser azeotrop entfernt. Nach Erreichen einer Säurezahl kleiner 3 (mg KOH/g Substanz) wird das Lösungsmittel im Vakuum entfernt und das Produkt einer Klärfiltration unterworfen. Es wird ein OH-gruppenhaltiger, ethylenisch ungesättigter Partialester mit einer OH-Zahl (mg KOH/g Substanz) von 105 und einer Säurezahl (mg KOH/g Substanz) von 2 erhalten.

## Hydroxygruppenhaltiger, ungesättigter Ester B

Es wird ein OH-gruppenhaltiger, ungesättigter Ester hergestellt, in dem 1 Äquivalent des ungesättigten Partialesters A mit 1 Mol Ricinolsäure azeotrop verestert wird. 387,4 g Ricinolsäure werden mit 696 g des ungesättigten Partialesters A in Gegenwart von 9,5 g p-Toluolsulfonsäure, jeweils 1,1 g Di-tert.-butylhydrochinon und p-Methoxyphenol in 480 g Toluol unter Durchleiten von Luft azeotrop ver estert. Nachdem sich kein Wasser mehr abscheidet, wird das Schleppmittel im Vakuum abdestilliert. Es wird ein hydroxylgruppenhaltiger, ungesättigter Ester mit einer OH-Zahl von 38 und einer Säurezahl von 2,3 erhalten.

### Beispiel 1

Zu 377 g des hydroxylgruppenhaltigen, ungesättigten Esters B werden bei Raumtemperatur unter Rühren und Durchleiten von Luft portionsweise 17 g Phosphorpentoxid zugegeben. Anschließend wird die Temperatur auf 60 °C erhöht und so lange gerührt, bis sich alles Phosphorpentoxid gelöst hat. Dann werden 0.2 g Di-tert.-butylhydrochinon zugesetzt und 10,7 g N,N-Dimethylaminoethanol langsam zugetropft. Nachdem die exotherme Reaktion abgeklungen ist, wird weiter erhitzt und gerührt, bis eine Konstanz der Säurezahl erreicht ist. Nach Hydrolyse von Meta- und Pyrophosphorsäurestrukturen ergibt sich durch Titration mit einer 0,1 N wäßrigen NaOH-Lösung unter Verwendung von Thymolphthalein als Indikator eine titrierbare Endsäurezahl von 42.

### Michael-Addukt I

Zu 116 g Hydroxyethylacrylat und 0,12 g p-Methoxyphenol werden bei 10 °C und Durchleiten von Luft 129 g Diisobutylamin zugetropft. Nach beendeter Zugabe wird noch zwei Stunden bei Raumtemperatur nachgerührt.

### Beispiel 2

Zu 224,2 g des ungesättigten Partialesters A werden unter Durchleiten von Luft portionsweise 28,4 g Phosphorpentoxid zugegeben. Nach beendeter Zugabe wird die Temperatur auf 60 °C erhöht und so lange gerührt, bis sich alles Phosphor pentoxid aufgelöst hat. Anschließend werden 0,15 g Di-tert.-butylhydrochinon zugesetzt und 49 g des Michael-Addukts I langsam zugetropft. Die Reaktionsmischung wird so lange bei 60 °C gerührt, bis eine Konstanz der Säurezahl erreicht ist. Die Titration der Endsäurezahl, wie in Beispiel 1 ausgeführt, ergibt einen Wert von 89.

### Hydroxylgruppenhaltiger, ungesättigter Ester C

Zu einem aus 561 g des ungesättigten Partialesters A und 98 g Maleinsäureanhydrid bei 100 °C erhaltenen Adukt werden zur azeotropen Veresterung 399 g Octaethylenglykol, 8,95 g p-Toluolsulfonsäure, jeweils 1,59 g Di-tert.-butylhydrochinon und p-Methoxyphenol und 450 g Toluol gegeben. Das Reaktionsgemisch wird unter Durchleiten von Luft zum Sieden erhitzt und das Reaktionswasser ausgekreist. Der erhaltene ungesättigte Ester weist eine OH-Zahl von 45 und eine Säurezahl von 8 auf.

### Michael-Addukt II

Zu 452 g Hexandiolbisacrylat werden unter Rühren 150 g 2-Methylaminoethanol unter Einleiten von Stickstoff so zugetropft, daß die Temperatur 60 °C nicht überschreitet. Nach beendeter Zugabe wird noch zwei Stunden nachgerührt. Das Reaktionsprodukt weist eine OH-Zahl von 81 auf.

### Beispiel 3

In 250 g des hydroxylgruppenhaltigen, ungesättigten Polyesters C und D 0,15 g Di-tert.-butylhydrochinon werden unter Rühren und Durchleiten von Luft bei Raumtemperatur portionsweise langsam 13,5 g Phosphorpentoxid eingetragen. Nach beendeter Zugabe wird die Temperatur auf 100 °C erhöht und so lange gerührt, bis sich alles Phosphorpentoxid gelöst hat. Die Temperatur wird dann auf 60 °C abgesenkt und 30 g des Michael-Adduktes II werden langsam zugetropft. Es wird bei dieser Temperatur nachgerührt, bis die Säurezahl konstant bleibt. Die Titration der Endsäurezahl, wie in Beispiel 1 ausgeführt, ergibt einen Wert von 53.

### Michael-Addukt III

Zu 212,3 g N-Methyloctadecylamin und 0,15 g p-Methoxyphenol werden unter Durchleiten von Luft bei 70 °C 87 g Hydroxyethylacrylat zugetropft. Nachdem die leicht exotherme Reaktion abgeklungen ist, wird noch weitere 4 Stunden bei dieser Temperatur gerührt. Es wird eine bei Raumtemperatur wachsartige Substanz erhalten.

Beispiel 4

Zu 224,2 g des hydroxylgruppenhaltigen, ungesättigten Esters A und 0,14 g Di-tert.-butylhydrochinon werden portionsweise unter Rühren und Durchleiten von Luft 28,4 g Phosphorpentoxid gegeben. Nach beendeter Zugabe wird die Temperatur auf 60 °C erhöht und so lange gerührt, bis sich alles Phosphorpentoxid gelöst hat. Anschließend werden 32 g des Michael-Addukts III sowie 190 g Butanon der Reaktionsmischung zugesetzt und bei 60 °C weitergerührt, bis eine Konstanz der Säurezahl erreicht worden ist. Die Bestimmung der Endsäurezahl ergibt einen Wert von 94 (bezogen auf Festgehalt).

Beispiel 5

Zu 52,2 g Toluylendiisocyanat und 0,08 g Hydrochinon werden bei 60 °C unter Rühren und Durchleiten von Luft 34,8 g Hydroxyethylacrylat zugetropft. Nachdem der Isocyanatgehalt auf 14,5 % gefallen ist, werden langsam 60,9 g Tetraethylenglykol zugetropft und anschließend wird so lange weitergerührt, bis der Isocyanatgehalt < 0,1 % ist. Anschließend werden in die Reaktionsmischung 39,9 g 2,2-Dimethylaminoethoxyethanol und 0,03 g Di-tert.-butylhydrochinon eingerührt und dann werden portionsweise 28,2 g Phosphorpentoxid zugesetzt. Es wird gerührt bis zur Konstanz der Säurezahl. Die Säurezahlendbestimmung ergibt einen Wert von 78.

Beispiel 6

Zu 150,0 g des Dispergators aus Beispiel 2 werden unter Rühren bei 60°C 72,1 g des Michael-Addukts II getropft und es wird noch drei Stunden bei dieser Temperatur nachgerührt. Die Neutralisation wurde mittels einer potentiometrischen Meßanordnung (Glaselektrode, pH-Meter) überprüft.

Nachfolgend wird die Herstellung von strahlenhärtbaren magnetischen Aufzeichnungsträgern mittels der erfindungsgemäßen Dispergatoren anhand von Beispielen beschrieben.

Beispiel A

Zur Herstellung einer Magnetbeschichtungsdispersion werden folgende Komponenten gemischt:
100 Gew.-Teile $\gamma$-Fe$_2$O$_3$
3,5 Gew.-Teile eines Dispergators bestehend aus dem Umsetzungsprodukt gemäß Beispiel 1
78,7 Gew.-Teile 30%ige Lösung eines Bindemittels bestehend aus dem Umsetzungsprodukt gemäß DE 32 00 970, Beispiel 5
0,2 Gew.-Teile Stearinsäure
68 Gew.-Teile Methylethylketon

Die Mischung wird in einem Disperser vordispergiert und in einer Rührwerkskugelmühle 3 Stunden gemahlen. Nach der Filtration wird der Beschichtungslack auf eine 20 μm-Polyesterfolie vergossen (Trockenschichtdicke 5μ) und im magnetischen Feld ausgerichtet. Das beschichtete Material wird nach der Trocknung mit 80 kp/cm Liniendruck kalandriert, in einer Elektronenstrahlanlage mit einer Dosis von 10 Mrad bei einer Beschleunigungsspannung von 175 kV bestrahlt und anschließend auf 6,3 mm Breite getrennt.

Beispiel B

Eine Magnetdispersion wird durch Mischung folgender Bestandteile hergestellt:
100 Gew.-Teile $\gamma$-Fe$_2$O$_3$
3,5 Gew.-Teile eines Dispergators bestehend aus dem Umsetzungsprodukt gemäß Beispiel 2
78,7 Gew.-Teile 30%ige Lösung eines Bindemittels bestehend aus dem Umsetzungsprodukt gemäß DE 32 00 970, Beispiel 5
0,2 Gew.-Teile Stearinsäure
68 Gew.-Teile Methylethylketon
Die Verarbeitung erfolgt analog Beispiel A.

Beispiel C

Folgende Bestandteile werden zur Herstellung einer Magnetdispersion gemischt:
100 Gew.-Teile $\gamma$-Fe$_2$O$_3$
3,5 Gew.-Teile eines Dispergators bestehend aus dem Umsetzungsprodukt gemäß Beispiel 6
78,7 Gew.-Teile des Umsetzungsproduktes eines Bindemittels gemäß DE 32 00 970, Beispiel 5
0,2 Gew.-Teile Stearinsäure
68 Gew.-Teile Methylethylketon
Die Verarbeitung erfolgt analog Beispiel A.

<u>Vergleichsbeispiel:</u>

Eine Magnetdispersion wird durch Mischen folgender Bestandteile hergestellt:
100 Gew.-Teile $\gamma$-Fe$_2$O$_3$
3,5 Gew.-Teile Lecithin
78,7 Gew.-Teile 30%ige Lösung eines Bindemittels bestehend aus dem Umsetzungsprodukt gemäß DE 32 00 970, Beispiel 5
0,2 Gew.-Teile Stearinsäure
68 Gew.-Teile Methylethylketon

Die Verarbeitung erfolgt analog Beispiel A.

Die erfindungsgemäß hergestellten magnetischen Aufzeichnungsträger zeichnen sich durch hervorragende Dispergiereigenschaften aus, was sich primär in einer verbesserten Ausrichtbarkeit der magnetischen Partikel zeigt (Tabelle 1). Die Ausrichtbarkeit wird durch folgende Messungen bewertet:

M$_R$/M$_S$ Verhältnis von remanenter Magnetisierung zur Magnetisierung bei 79,6 $\frac{kA}{m}$:

OR Verhältnis der remanenten Magnetisierungen in Längs- und Querrichtung des Bandes nach vorheriger Magnetisierung mit einer Feldstärke von 318,4 $\frac{kA}{m}$.

Tabelle 1

| Probe nach | M$_R$/M$_S$ | OR |
|---|---|---|
| Beispiel A | 0,88 | 2,7 |
| Beispiel B | 0,89 | 2,9 |
| Beispiel C | 0,89 | 2,8 |
| Vergleichsbeispiel | 0,87 | 2,5 |

Aufgrund der erhöhten Ausrichtbarkeit besitzen die erfindungsgemäßen magnetischen Aufzeichnungsträger verbesserte elektroakustische Daten (Empfindlichkeit, Aussteuerbarkeit).

Darüber hinaus zeigen die erfindungsgemäßen magnetischen Aufzeichnungsträger auch erhebliche Vorteile in mechanischen Bandeigenschaften. Da das erfindungsgemäße Dispergiermittel durch Bestrahlung vernetzt beziehungsweise bei Einsatz von strahlenhärtbaren Bindemitteln durch Bestrahlung in die Bindemittelmatrix eingebaut wird, wird eine deutliche Verringerung der Klebeneigung der erfindungsgemäßen Bänder insbesondere nach Klimalagerung und eine verbesserte Lösungsmittelbeständigkeit der erfindungsgemäßen Schichten festgestellt (Tabelle 2).

Folgende Prüfmethodik wurde angewandt:

- Prüfung der Klebeneigung WK: 150 m des zu prüfenden Bandes werden unter konstanten Wickelbedingungen aufgerollt (Wickelzug 150 p) und 72 Stunden bei 55 °C gelagert.

Nach dem langsamen Abkühlen auf 20 °C wird das Prüfband bis auf 50 m abgerollt. Daraufhin wird die Abzugkraft gemessen, die zum Abziehen von 3 m Prüfband notwendig ist (Angabe in mp).
- Prüfung der Lösungsmittelbeständigkeit:

<u>THF-Test:</u>

Ein mit Tetrahydrofuran getränkter Leinenlappen wird mit definiertem Andruck und mit definierter Geschwindigkeit in 10 Reversierschritten über 15 cm Band geführt. Nach Abschluß des Tests wird das Prüfband nach folgender Skala bewertet:
unlöslich
etwas löslich
löslich

Tabelle 2

| Probe nach | WK | THF-Test |
|---|---|---|
| Beispiel A | 117 mp | unlöslich |
| Beispiel B | 78 mp | unlöslich |
| Beispiel C | 125 mp | unlöslich |
| Vergleichsbeispiel | 2080 mp | etwas löslich |

Die erfindungsgemäßen magnetischen Aufzeichnungsträger weisen neben der verringerten Klebeneigung und der verbesserten Lösungsmittelbeständigkeit außerdem noch verringerte Reibung, verringerte Kratzempfindlichkeit und verbesserte Abriebfestigkeit bei extremer Beanspruchung auf.

## Patentansprüche

1. Strahlenhärtbarer magnetischer Aufzeichnungsträger, bestehend aus einem nichtmagnetischen Schichtträger sowie einer Magnetschicht, welche Pigmente, Bindemittel, weitere Zusatzstoffe sowie strahlenhärtbare Dispergatoren auf Basis ethylenisch ungesättigter Phosphorsäureestergemische enthält, auf der Vorderseite des Schichtträgers und gegebenenfalls einer nichtmagnetisierbaren bindemittelhaltigen Schicht auf der Rückseite des Schichtträgers, welche weitere Zusatzstoffe sowie strahlenhärtbare Dispergatoren auf Basis ethylenisch ungesättigter Phosphorsäureestergemische enthält, dadurch gekennzeichnet, daß die Phosphorsäureestergemische als Dispergatoren zur Ausbildung betainartiger Strukturen befähigt sind und Umsetzungsprodukte sind von

A 1-2,5 Äquivalenten OH eines eine Hydroxylgruppe pro Molekül enthaltenden (Meth)Acrylsäureesters und/oder Oligo(meth)acrylates
B 1-2,5 Äquivalenten OH eines eine Hydroxylgruppe pro Molekül enthaltenden gesättigten und/oder ethylenisch ungesättigten tertiären Alkylamins und
C 1 Mol Phosphorpentoxid oder 1 Mol Phosphorpentoxidäquivalent
wobei die Summe der Äquivalente OH aus A und B wenigstens 3 - 4 beträgt und die Umsetzungsprodukte eine Säurezahl (mg KOH/g Substanz) von weniger als 200, vorzugsweise von weniger als 150, insbesondere von weniger als 100 aufweisen und gegebenenfalls mit einer Base neutralisiert sind.

2. Strahlenhärtbarer magnetischer Aufzeichnungsträger nach Anspruch 1, dadurch gekennzeichnet, daß Komponente A des Dispergators wenigstens ein $C_1$-$C_6$-Alkyl-Hydroxyalkyl(meth)acrylat, ein Glycerin-, Trimethylolpropandi(meth)acrylat, Pentaerythrittri(meth)acrylat oder ein aus den entsprechenden Alkoholen oxethyliertes oder oxpropyliertes (Meth)Acrylat ist.

3. Strahlenhärtbarer magnetischer Aufzeichnungsträger nach Anspruch 1, dadurch gekennzeichnet, daß Komponente A des Dispergators ein Umsetzungsprodukt aus wenigstens einem Ester einer $C_3$-$C_{18}$-Monohydroxycarbonsäure und einem eine Hydroxylgruppe pro Molekül enthaltenden Hydroxyalkyl(meth)acrylat und/oder Oligo(meth)acrylat ist.

4. Strahlenhärtbarer magnetischer Aufzeichnungsträger nach Anspruch 1, dadurch gekennzeichnet, daß Komponente A des Dispergators wenigstens ein eine Hydroxylgruppe pro Molekül enthaltendes Polyester- oder Polyether(meth)acrylat ist, das durch Umsetzung eines di- oder trihydroxylfunktionellen Polyesters oder Polyethers mit (Meth)Acrylsäure oder mit einer aliphatischen, cycloaliphatischen oder aromatischen Dicarbonsäure oder entsprechendem Derivat und einem eine Hydroxylgruppe pro Molekül enthaltenden Hydroxyalkyl(meth)acrylat oder Oligo(meth)acrylat erhalten wird.

5. Strahlenhärtbarer magnetischer Aufzeichnungsträger nach Anspruch 1, dadurch gekennzeichnet, daß Komponente A des Dispergators wenigstens ein eine Hydroxylgruppe pro Molekül enthaltendes Urethan(meth)acrylat ist, das durch Umsetzung eines eine Hydroxylgruppe pro Molekül enthaltenden Hydroxyalkyl(meth)acrylat oder Oligo(meth)acrylat, einem di- oder trifunktionellen Isocyanat und einem difunktionellen Alkohol, Polyester- oder Polyetherdiol erhalten wird.

6. Strahlenhärtbarer magnetischer Aufzeichnungsträger nach Anspruch 1, dadurch gekennzeichnet, daß Komponente B des Dispergators wenigstens ein Alkyl- und/oder Cycloalkyl- und/oder Aryl-N,N-disubstituiertes Aminoethanol oder Aminopropanol ist.

7. Strahlenhärtbarer magnetischer Aufzeichnungsträger nach Anspruch 1, dadurch gekennzeichnet, daß Komponente B des Dispergators wenigstens ein eine Hydroxylgruppe pro Molekül enthaltendes gesättigtes oder ungesättigtes tertiäres Amin ist, das durch Michael-Addition aus einem (Meth)Acrylsäureester mit 1 bis 3 (Meth)Acryloylgruppen pro Molekül und einem Alkyl-, Cycloalkyl- oder Aryl-N-substituierten Aminoethanol oder Aminopropanol erhalten wird.

8. Strahlenhärtbarer magnetischer Aufzeichnungsträger nach Anspruch 1, dadurch gekennzeichnet, daß Komponente B des Dispergators wenigstens ein eine Hydroxylgruppe pro Molekül enthaltendes gesättigtes oder ungesättigtes tertiäres Amin ist, das durch Michael-Addition aus einem Hydroxyalkyl(meth)acrylat oder Oligo(meth)acrylat und einem Dialkylamin erhalten wird.

9. Strahlenhärtbarer magnetischer Aufzeichnungsträger nach Anspruch 1, dadurch gekennzeichnet, daß die Phosphorsäureestergemische, entsprechend der in einer Neutralisationstitration bestimmten Säurezahl, mit einem Alkalihydroxid, Alkalicarbonat, Alkalihydrogencarbonat, Ammoniak oder einem gesättigten oder ethylenisch unge sättigten Amin, insbesondere tertiären Amin neutralisiert sind.

10. Strahlenhärtbarer magnetischer Aufzeichnungsträger nach Anspruch 1, dadurch gekennzeichnet, daß als Bindemittel eine olefinisch ungesättigte strahlenhärtbare Verbindung eingesetzt wird.

## Revendications

1. Supports d'enregistrement magnétiques durcissables sous l'action de radiations, consistant en un support de couche non magnétique et une couche magnétique qui contient des pigments, des liants, d'autres additifs et des agents dispersants durcissables sous l'action de radiations à base de mélanges d'esters phosphoriques à insaturation éthylénique sur la face antérieure du support de couche et, le cas échéant, sur la face postérieure du support de couche, une couche non magnétisable contenant des liants et d'autres additifs ainsi que des agents dispersants durcissables sous l'action de radiations à base de mélanges d'esters phosphoriques à insaturation éthylénique, caractérisés en ce que les mélanges d'esters phosphoriques utilisés comme agents dispersants sont capables de former des structures du type bétaïne et consistent en produits de réaction de:

A 1 à 2,5 équivalents de groupes OH d'un ester (méth)acrylique et/ou oligo (méth)acrylate contenant un groupe hydroxy par molécule

B 1 à 2,5 équivalents de groupes OH d'une alkylamine tertiaire saturée et/ou à insaturation éthylénique contenant un groupe hydroxy par molécule, et

C 1 mol de pentoxyde de phosphore ou 1 mol d'équivalent du pentoxyde de phosphore, la somme des équivalents des groupes OH de A et B étant d'au moins 3 à 4 et les produits de réaction ayant un indice d'acide (en mg de KOH par g de substance) inférieur à 200, de préférence inférieur à 150 et plus spécialement inférieur à 100, et étant le cas échéant neutralisés par une base.

2. Supports d'enregistrement magnétiques durcissables sous l'action de radiations selon la revendication 1, caractérisés en ce que le composant A de l'agent dispersant consiste en au moins un (méth)acrylate d'(alkyle en $C_1–C_6$)-hydroxyalkyle, un di-(méth)acrylate du glycérol, du triméthylolpropane, un tri-(méth)acrylate du pentaérythritol ou un (méth)acrylate des alcools correspondants oxyéthylé ou oxypropylé.

3. Supports d'enregistrement magnétiques durcissables sous l'action de radiations selon la revendication 1, caractérisés en ce que le composant A de l'agent dispersant est un produit de réaction d'au moins un ester d'un acide monohydroxycarboxylique en $C_3–C_{18}$ et d'un (méth)acrylate d'hydroxyalkyle et/ou oligo (méth)acrylate contenant un groupe hydroxy par molécule.

4. Supports d'enregistrement magnétiques durcissables sous l'action de radiations selon la revendication 1, caractérisés en ce que le composant A de l'agent dispersant consiste en au moins un polyester- ou polyéther-(méth)acrylate contenant un groupe hydroxy par molécule, qui a été obtenu par réaction d'un polyester ou polyéther di- ou tri-fonctionnel en groupes hydroxy avec l'acide (méth)acrylique ou avec un acide dicarboxylique aliphatique, cycloaliphatique ou aromatique ou un dérivé correspondant et un (méth)acrylate d'hydroxyalkyle ou oligo (méth)acrylate contenant un groupe hydroxy par molécule.

5. Supports d'enregistrement magnétiques durcissables sous l'action de radiations selon la revendication 1, caractérisés en ce que le composant A de l'agent dispersant consiste en au moins un uréthanne-(méth)acrylate contenant un groupe hydroxy par molécule, qui a été obtenu par réaction d'un (méth)acrylate d'hydroxyalkyle ou oligo (méth)acrylate contenant un groupe hydroxy par molécule, d'un isocyanate di- ou tri-fonctionnel et d'un alcool difonctionnel, d'un polyester- ou polyéther-diol.

6. Supports d'enregistrement magnétiques durcissables sous l'action de radiations selon la revendication 1, caractérisés en ce que le composant B de l'agent dispersant consiste en au moins un aminoéthanol ou aminopropanol N,N-disubstitué par des groupes alkyle et/ou cycloalkyle et/ou aryle.

7. Supports d'enregistrement magnétiques durcissables sous l'action de radiations selon la revendication 1, caractérisés en ce que le composant B de l'agent dispersant consiste en au moins une amine tertiaire saturée ou insaturée contenant un groupe hydroxy par molécule, qui a été obtenue par une addition de Michael à partir d'un ester (méth)acrylique contenant 1 à 3 groupes (méth)acryloyle par molécule et d'un aminoéthanol ou aminopropanol N-substitué par un groupe alkyle, cycloalkyle ou aryle.

8. Supports d'enregistrement magnétiques durcissables sous l'action de radiations selon la revendication 1, caractérisés en ce que le composant B de l'agent dispersant consiste en au moins une amine tertiaire saturée ou insaturée contenant un groupe hydroxy par molécule, qui a été obtenue par une addition de Michael à partir d'un (méth)acrylate d'hydroxyalkyle ou oligo (méth)acrylate et d'une dialkylamine.

9. Supports d'enregistrement magnétiques durcissables sous l'action de radiations selon la revendication 1, caractérisés en ce que les mélanges d'esters phosphoriques sont neutralisés par une quantité correspondant à l'indice d'acide, déterminé par titrage neutralisant, d'un hydroxyde alcalin, d'un bicarbonate alcalin, d'un bicarbonate alcalin, d'ammoniac ou d'une amine saturée ou à insaturation éthylénique, en particulier une amine tertiaire.

10. Supports d'enregistrement magnétiques durcissables sous l'action de radiations selon la revendication 1, caractérisés en ce que le liant utilisé est un composé à insaturation oléfinique durcissable sous l'action de radiations.

## Claims

1. Radiation hardenable magnetic recording carrier consisting of a non-magnetic layer support and a magnetic layer containing pigments, binders, other additives and radiation hardenable dispersing agents based on ethylenically unsaturated phosphoric acid ester mixtures on the front of the layer support and optionally a non-magnetizable layer containing binder on the back of the layer support, which layer contains further additives and radiation hardenable dispersing agents based on ethylenically unsaturated phosphoric acid ester mixtures, characterised in that the phosphoric acid ester mixtures used as dispersing agents are capable of forming betainetype structures and are reaction products of

A 1–2.5 OH equivalents of a (meth)acrylic acid ester and/or oligo(meth)acrylate containing one hydroxyl group per molecule,

B 1–2.5 OH equivalents of a saturated and/or ethylenically unsaturated tertiary alkylamine containing 1 hydroxyl group per molecule and

C 1 mol of phosphorus pentoxide or 1 mol of phosphorus pentoxide equivalent, in which the sum of OH equivalents from A and B amount to at least 3–4 and the reaction products have an acid number (mg KOH/g of substance) of less than 200, preferably less than 150, in particular less than 100 and are optionally neutralised with a base.

2. Radiation hardenable magnetic recording carrier according to claim 1, characterised in that component A of the dispersing agent consists of at least one $C_1$–$C_6$ alkyl-hydroxyalkyl(meth)acrylate, a glycerol-, trimethylol propane-di(meth)acrylate, pentaerythritol tri(meth)acrylate or an ethoxylated or propoxylated (meth)acrylate obtained from the corresponding alcohols.

3. Radiation hardenable magnetic recording carrier according to claim 1, characterised in that component A of the dispersing agent is a reaction product of at least one ester of a $C_3$–$C_{18}$ monohydroxy carboxylic acid and a hydroxy alkyl(meth)acrylate and/or oligo (meth)acrylate containing 1 hydroxyl group per molecule.

4. Radiation hardenable magnetic recording carrier according to claim 1, characterised in that component A of the dispersing agent consists of at least one polyester- or polyether-(meth)acrylate containing one hydroxyl group per molecule and obtained by the reaction of a di- or tri-hydroxy functional polyester or polyether with (meth)acrylic acid or with an aliphatic, cycloaliphatic or aromatic dicarboxylic acid or corresponding derivative and a hydroxy alkyl (meth)acrylate or oligo(meth)acrylate containing one hydroxyl group per molecule.

5. Radiation hardenable magnetic recording carrier according to claim 1, characterised in that component A of the dispersing agent consists of at least one urethane(meth)acrylate which contains one hydroxyl group per molecule and has been obtained by the reaction of a hydroxy alkyl(meth)acrylate or oligo (meth)acrylate containing one hydroxyl group per molecule, a di-or tri-functional isocyanate and a difunctional alcohol, polyester diol or polyether diol.

6. Radiation hardenable magnetic recording carrier according to claim 1, characterised in that component B of the dispersing agent consists of at least one alkyl- and/or cycloalkyl- and/or aryl-N,N-disubstituted aminoethanol or amino propanol.

7. Radiation hardenable magnetic recording carrier according to claim 1, characterised in that component B of the dispersing agent consists of at least one saturated or unsaturated tertiary amine which contains one hydroxyl group per molecule and has been obtained by Michael addition from a (meth)acrylic acid ester containing 1–3 (meth)acryloyl groups per molecule and an alkyl-, cyclo-alkyl- or aryl-N-substituted aminoethanol or aminopropanol.

8. Radiation hardenable magnetic recording carrier according to claim 1, characterised in that component B of the dispersing agent consists of at least one saturated or unsaturated tertiary amine containing one hydroxyl group per molecule and obtained by Michael addition from a hydroxy alkyl(meth) acrylate or oligo(meth) acrylate and a dialkylamine.

9. Radiation hardenable magnetic recording carrier according to claim 1, characterised in that the phosphoric acid ester mixtures are neutralised with an alkali metal hydroxide, alkali metal carbonate, alkali metal bicarbonate, ammonia or a saturated or ethylenically unsaturated amine, in particular a tertiary amine, in accordance with the acid number determined by a neutralisation titration.

10. Radiation hardenable magnetic recording carrier according to claim 1, characterised in that the binder used is an olefinically unsaturated, radiation hardenable compound.